# EUROPÄISCHE PATENTANMELDUNG

(11) **EP 1 046 488 A2**
(43) Veröffentlichungstag der Anmeldung: **25.10.2000**
(21) Anmeldenummer: 00108330.2
(22) Anmeldetag: 15.04.2000
(51) Int. Cl.: B29C 47/02, E04F 13/06

(54) **Verfahren und Vorrichtung zum Herstellen von Kunststoffprofilen mit Gittergewebekonfektionierung**

(30) Priorität: 20.04.1999 DE 19917738
(71) Anmelder: PROTEKTORWERK FLORENZ MAISCH GmbH & Co. KG, 76571 Gaggenau (DE)
(72) Erfinder: Brinkmeier Günther, D-76571 Gaggenau (DE)
(74) Vertreter: Geitz, Heinrich, Dr.-Ing.

(57) **Zusammenfassung**

Bei dem Verfahren zum Herstellen von Kunststoffprofilen mit Gittergewebekonfektionierung wird das Kunststoffprofil durch Extrudieren hergestellt und beim Extrudieren wenigstens ein Randstreifen eines langgestreckten Gittergewebes in das noch plastifizierte Kunststoffmaterial eingebettet, wobei das plastifizierte Kunststoffmaterial die Gittergewebemaschen durchdringt und das die Maschen bildende Material des Gittergewebes umschließt.

Die Vorrichtung (10) zum Durchführen dieses Verfahrens ist als Form zum Extrudieren mit wenigstens einem langgestreckten, an einem Stirnende ausmündenden Formhohlraum (13) ausgebildet und in Längsrichtung des Formhohlraums (13) erstreckt sich ein letzteren schneidender flacher Spalt (18) hindurch, der von dem Stirnende mit der Ausmündung des Formhohlraums (13) bis zum anderen Stirnende durchläuft und zum Zuführen eines Gittergewebestreifens dient, der beim Ausformen des Kunststoffprofils in die noch plastifizierte Kunststoffmasse eingebettet und dadurch fest mit dem Kunststoffprofil verbunden wird.

## Beschreibung

Die Erfindung bezieht sich auf ein Verfahren zum Herstellen von Kunststoffprofilen mit Gittergewebekonfektionierung, wobei ein netzartiger Gittergewebestreifen nach wenigstens einer Seite von zumindest einem Kunststoffprofil vorsteht. Ferner bezieht sich die Erfindung auf eine Vorrichtung zum Durchführen des vorgenannten Verfahrens.

Mit Gittergewebe konfektionierte Kunststoffprofile sind allgemein bekannt.

So ist in der DE-OS 26 41 585 ein aus Kunststoff gefertigter Kantenschutzwinkel mit über dessen rechtwinklig zueinander verlaufende Schenkel seitlich vorstehenden Gittergewebestreifen vorbeschrieben. Bei dem Gittergewebe kann es sich um Glasfaser-, Textil-, Kunststoff- oder Metallgewebe mit unterschiedlichen Maschengrößen handeln.

Hergestellt wird der mit Gittergewebe konfektionierte Kantenschutzwinkel in der Weise, daß in eine rinnenartige Form, die der äußeren Gestalt des Kantenschutzwinkels entspricht, Preßkunststoff eingefüllt und dann im Bereich der verlängerten Innenflächen der Form Gittergewebe eingelegt wird. Beim anschließenden Verpressen des Kantenschutzwinkels wird das Gittergewebe in den Kunststoff eingedrückt und letzterer durch Preßdruck sowie eventuelles Erhitzen verfestigt.

Die Herstellung der Kantenschutzwinkel nach der vorgenannten Schrift erfolgt diskontinuierlich und ist daher zeitaufwendig und teuer.

Mit Gittergewebe konfektionierte Kantenschutzwinkel kommen vornehmlich als Eckbewehrungen bei sogenannten Vollwärmeschutzsystemen zum Einsatz. Dabei werden die über die Schenkel der Kantenschutzprofile vorstehenden Gittergewebestreifen eingespachtelt und dann überputzt.

Es sind auch bereits für den Anschluß beispielsweise von Fenster- oder Türzargen an angrenzende Putzflächen bestimmte Profile mit Gittergewebekonfektionierung bekannt geworden, bei denen die Gittergewebestreifen mit den Abschlußprofilen verklebt oder an diesen durch Einklemmung zwischen Teilen der jeweiligen Abschlußleiste und speziellen Klemmelementen festgelegt sind. Eine Abschlußleiste mit einem an dieser mittels Klemmhalterung festgelegten Glasfasergewebestreifen ist beispielsweise in der EP 0 398 937 B1 vorbeschrieben.

Das aus der vorgenannten Druckschrift vorbekannte Abschlußprofil mit Gittergewebekonfektionierung ist mehrteilig ausgebildet und demgemäß in der Herstellung ebenfalls teuer.

Demgegenüber sollen durch die Erfindung ein einfaches und kostengünstiges Verfahren zum Herstellen von Kunststoffprofilen mit Gittergewebekonfektionierung sowie eine Vorrichtung zum Durchführen eines derartigen Verfahrens geschaffen werden.

Der verfahrenstechnische Teil dieser Erfindungsaufgabe ist bei dem Verfahren nach dem Oberbegriff des Patentanspruchs 1 durch die Herstellung des Kunststoffprofils durch Extrudieren sowie dadurch gelöst, daß beim Extrudieren wenigstens ein Randstreifen eines langgestreckten Gittergewebes in das noch plastifizierte Kunststoffmaterial eingebettet und im Bereich der Gittergewebemaschen vom Kunststoffmaterial durchdrungen sowie von letzterem umschlossen wird.

Bei der Erfindung handelt es sich somit darum, daß beim Extrudieren des Kunststoffprofils mit dessen noch plastifiziertem Kunststoffmaterial wenigstens ein Randstreifen eines Gittergewebestreifens zusammengeführt und beim Ausformen des Kunststoffprofils in dessen Kunststoffmaterial einbettet wird. Auf diese Weise gelingt eine kontinuierliche Profilherstellung bei gleichzeitiger Gittergewebekonfektionierung, wobei als Gittergewebe beispielsweise Rollenmaterial einsetzbar ist und mit einer der Ausformgeschwindigkeit des extrudierten Kunststoffprofils entsprechenden Geschwindigkeit mit dem noch plastifizierten Kunststoffmaterial zusammengeführt wird.

Eine zweckmäßige Weiterbildung des erfindungsgemäßen Herstellungsverfahrens sieht vor, daß gleichzeitig wenigstens zwei Kunststoffprofile beabstandet voneinander extrudiert werden und daß in deren noch plastifiziertes Kunststoffmaterial zumindest jeweils ein Randstreifen eines die beiden Kunststoffprofile miteinander verbindenden Gittergewebes eingebettet wird.

Die letztgenannte Verfahrensvariante ermöglicht das Verbinden von zwei oder mehr parallel zueinander verlaufenden Kunststoffprofilen mittels eines sich durch die genannten Kunststoffprofile hindurcherstreckenden Gittergewebestreifens oder mittels eines sich jeweils zwischen den Kunststoffprofilen erstreckenden und mit Randstreifen in die Kunststoffprofile eingebetteten Gittergewebestreifens.

Gemäß einer abermaligen Weiterbildung kann das erfindungsgemäße Verfahren auch so ausgestaltet sein, daß beim Extrudieren eines Kunststoffprofils in voneinander beabstandete Profilbereiche streifenförmige Abschnitte zumindest eines Gewebestreifens eingebettet werden.

In vorrichtungstechnischer Hinsicht ist die der Erfindung zugrundeliegende Aufgabe durch die Ausbildung der Vorrichtung als Form zum Extrudieren mit wenigstens einem langgestreckten, an einem Stirnende der Form ausmündenden Formhohlraum gekennzeichnet, in den ein Kanal zum Zuführen plastifizierter Kunststoffmasse ausmündet und der dem Querschnitt des herzustellenden Kunststoffprofils angepaßt ist, ferner dadurch, daß sich durch die Form in Längsrichtung des Formhohlraums ein diesen schneidender flacher Spalt hindurcherstreckt, der von dem Stirnende mit der Ausmündung des Formhohlraums bis zum anderen Stirnende durchläuft.

Der sich in Längsrichtung des Formhohlraums durch die Form hindurcherstreckende Spalt dient zum Zuführen eines Gittergewebestreifens zu der plastifizierten Kunststoffmasse beim Extrudieren des Kunststoffprofils, wobei naturgemäß die Zuführgeschwindigkeit des Gittergewebes gleich der Ausformgeschwindigkeit des Kunststoffprofils beim Extrudieren sein muß.

Der zum Zuführen des Gittergewebes zu der noch plastifizierten Kunststoffmasse beim Extrudieren des Kunststoffprofils dienende Spalt kann sich auf beiden Seiten oder auch nur auf einer Seite des Formhohlraums entlangerstrecken.

Wenn der genannte Spalt sich von einer Seitenkante der Form aus in diese hineinerstreckt, lassen sich Gittergewebestreifen beliebiger Breitenerstreckung beim Extrudieren des Kunststoffprofils mit dem noch plastifizierten Kunststoffmaterial zusammenführen.

Gemäß einer anderen Weiterbildung der erfindungsgemäßen Vorrichtung ist die Form zweiteilig mit einem Formunterteil und einem Formoberteil ausgebildet, wobei sich Teile des Formhohlraumes in den beiden Formteilen erstrecken und die beiden Formteile unter Ausbildung des den Formhohlraum schneidenden flachen Spaltes derart beabstandet voneinander gehalten sind, daß durch den Spalt ein Gittergewebestreifen, dessen Breitenerstreckung größer als die Breite der Form sein kann, beim Extrudieren des Kunststoffprofils mit dessen noch plastifizierter Kunststoffmasse zusammenführbar ist.

Eine abermalige Weiterbildung der Vorrichtung sieht vor, daß die Form wenigstens zwei parallel zueinander verlaufende und am selben Stirnende ausmündende Formhohlräume besitzt. Eine derartige Vorrichtungsausbildung ermöglicht es, zwei voneinander beabstandete Kunststoffprofile mittels eines sich zwischen diesen oder auch durch die Kunststoffprofile hindurcherstreckenden Gittergewebestreifens miteinander zu verbinden.

Im Interesse eines einfachen Vorrichtungsaufbaues können die parallel zueinander verlaufenden Formhohlräume mit einem gemeinsamen Kanal zum Zuführen plastifizierter Kunststoffmasse ausgerüstet sein.

Anhand der beigefügten Zeichnungen sollen nachstehend eine Vorrichtung zum Herstellen von Kunststoffprofilen mit Gittergewebekonfektionierung sowie das Herstellungsverfahren erläutert werden. In schematischen Ansichten zeigen:
- Fig. 1: eine zweiteilige Form mit einem sich über eine Teilungsfuge zwischen einem Unterteil und einem vom Oberteil hinwegerstreckenden Formhohlraum in einer Seitenansicht,
- Fig. 2: einen der Schnittlinie II-II in Fig. 1 entsprechenden Querschnitt durch die Form,
- Fig. 3: einen Querschnitt gemäß zur Schnittlinie III-III in Fig. 1 durch die Form,
- Fig. 4: in einer Draufsicht zu Fig. 1 das Extrudieren eines Kederprofils und dessen gleichzeitiges Konfektionieren mit einem nach einer Seite von dem Kederprofil vorstehenden Gittergewebestreifen,
- Fig. 5: in einer perspektivischen Explosionsdarstellung das Unterteil und Oberteil einer zweiteiligen Form mit zwei beabstandet voneinander verlaufenden, sich jeweils im Formunterteil und Formoberteil erstreckenden Formhohlräumen,
- Fig. 6: die unter Ausbildung eines flachen Spaltes beabstandet voneinander in einem Traggestell gehalterten Formteile nach Fig. 5 und
- Fig. 7: das Herstellen parallel zueinander verlaufender und mit einem Gittergewebestreifen konfektionierter Kederprofile anhand der in Fig. 6 veranschaulichten Form.

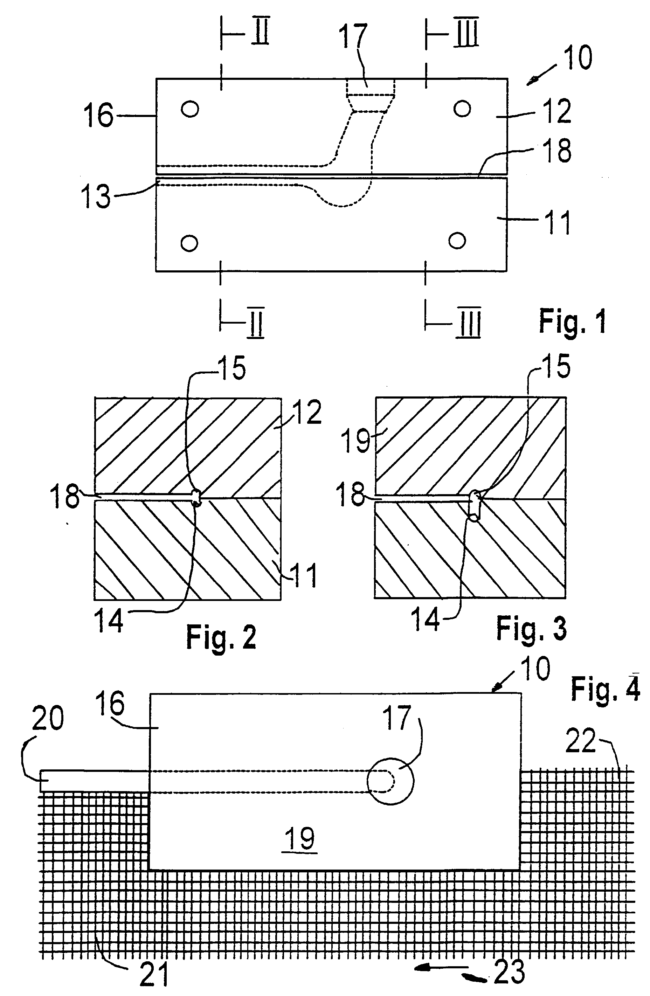

Die in den Fig. 1 bis 4 veranschaulichte Form 10 zum Extrudieren langgestreckter und etwa ovalen Querschnitt aufweisender Kederprofile ist zweiteilig ausgebildet und umfaßt ein Formunterteil 11 und ein Formoberteil 12. Über zwei Drittel der Länge der Form erstreckt sich im Bereich der Teilungsfuge zwischen dem Formunterteil 11 und Formoberteil 12 ein Formhohlraum 13, der sich jeweils von den einander zugewandten Seiten aus in den beiden Formteilen 11, 12 erstreckenden Nuten 14, 15 gebildet wird und an einem Stirnende 16 der Form ausmündet sowie etwa ovalen Querschnitt aufweist. Der Formhohlraum 13 steht mit einem sich im Formoberteil 12 erstreckenden Kanal 17 zum Zuführen plastifizierter Kunststoffmasse in Verbindung.

Ferner erstreckt sich in Richtung der Längenausdehnung des Formhohlraums 13 ein flacher Spalt 18 durch die Form hindurch, der bis zu einer seitlichen Längskante 19 der Form 10 reicht und sich nach der von der Ausmündung des Formhohlraums abgewandten Stirnseite 16 fluchtend zum Formhohlraum 13 erstreckt.

Beim Extrudieren von Kunststoffprofilen wird über den sich durch das Formoberteil 12 hindurcherstreckenden Kanal 17 plastifizierte Kunststoffmasse im Formhohlraum 13 zugeführt, die dann im Formhohlraum 13 ihre Ausformung erfährt und im weitgehend ausgehärteten Zustand im Bereich der Ausmündung des Formhohlraums 13 aus der Form 10 austritt. Beim Extrudieren des als Keder 20 ausgebildeten Kunststoffprofils wird durch den sich auf einer Seite des Formhohlraums 13 und fluchtend zu diesem durch die Form 10 erstreckenden flachen Spalt 18 ein Gittergewebestreifen 21 in Richtung des Pfeils 23 hindurchgeführt, der mit einem Randstreifen beim Extrudieren in die noch plastifizierte Kunststoffmasse eingebettet und dadurch fest im Kunststoffprofil verankert wird. Beim Extrudieren durchdringt die noch plastifizierte Kunststoffmasse die Maschen 22 des Gittergewebes 21 und schließt letzteres im Bereich des eingebetteten Randstreifens vollständig ein.

Wesentlich bei dem mit der Vorrichtung nach den Fig. 1 bis 4 durchführbaren Verfahren ist das Herstellen des Kederprofils 20 samt Gittergewebekonfektionierung 21 in einem kontinuierlichen Arbeitsgang. Insoweit hat sich die Verwendung von Rollenmaterial als Gittergewebe bewährt.

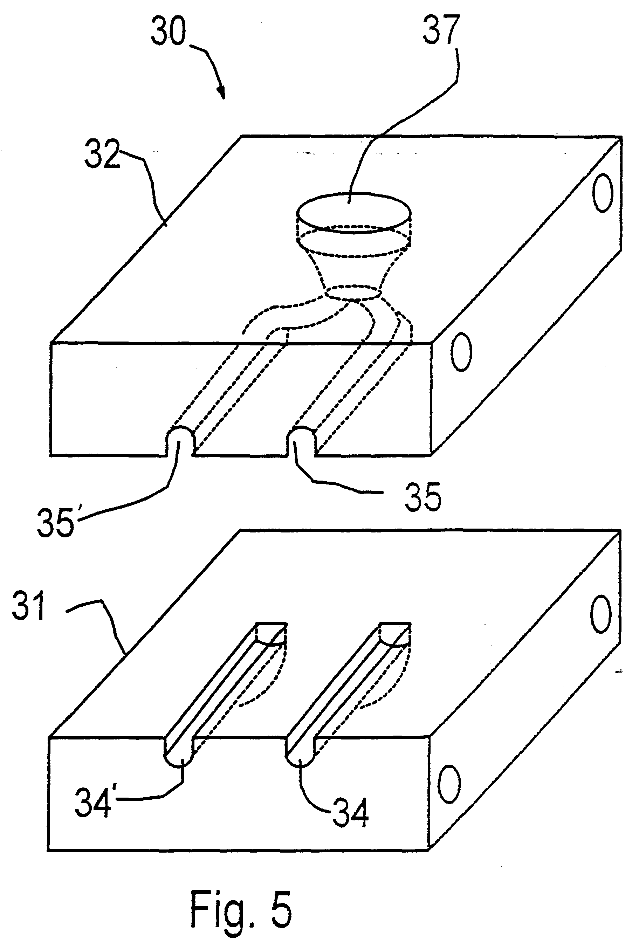

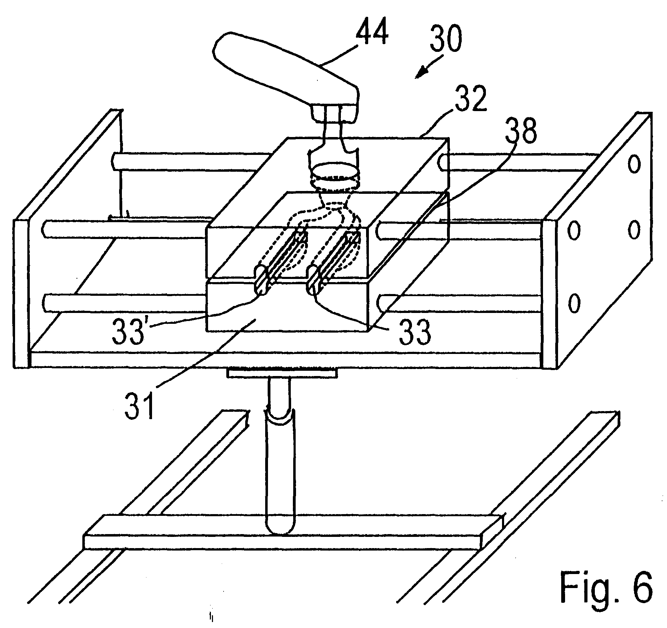

Die in den Fig. 5 und 6 veranschaulichte Form 30 ist für das gleichzeitige Extrudieren von zwei beabstandet voneinander laufenden Kederprofilen und deren Gittergewebekonfektionierung in der Weise bestimmt, daß die ausgeformten Kederprofile durch das Gittergewebe fest miteinander verbunden sind.

Wie bei der in Verbindung mit den Fig. 1 bis 4 erläuterten Form 10 sind bei der Form 30 in das Formunterteil 31 und das Formoberteil 32 jeweils parallel zueinander verlaufende Nuten 34, 34' und 35, 35' eingearbeitet, die sich etwa über die halbe Länge der Form 30 erstrecken und nach dem Zusammenfügen der Formteile 31, 32 zwei parallel zueinander verlaufende Formhohlräume 13, 13' bilden. Mit den in das Formoberteil 32 eingearbeiteten Nuten 35, 35' steht ein Kanal 37 zum Zuführen plastifizierter Kunststoffmasse in Verbindung.

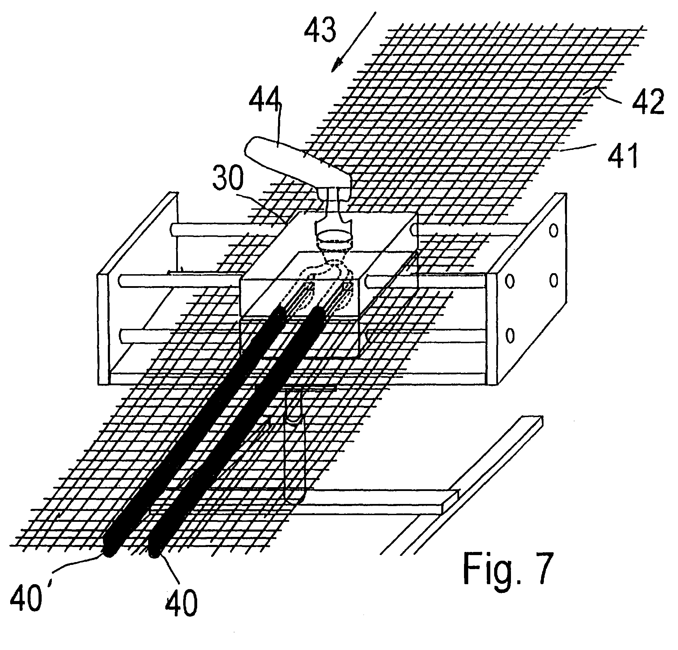

Fig. 6 veranschaulicht die Aufnahme des Formunterteils 31 und Formoberteils 32 in einem hier nicht weiter interessieren Traggestell, in dem die beiden Formteile 31m 32 unter Ausbildung eines sich zwischen letzteren erstrecken flachen Spaltes 38 beabstandet voneinander gehaltert sind. Beim Extrudieren beabstandet voneinander verlaufender Kederprofile 40, 40' wird über einen nur angedeuteten Schlauch 44 und den sich im Formoberteil 31 erstreckenden Kanal 37 den beiden Formhohlräumen 33, 33' kontinuierlich plastifizierte Kunststoffmasse unter Druck zugeführt und gleichzeitig ein Gittergewebestreifen 41 in Richtung des Pfeils 43 mit der noch plastifizierten Kunststoffmasse zusammengeführt, wie Fig. 7 zeigt. Die Breitenerstreckung des Gittergewebestreifens 41 ist größer als die Breitenerstreckung der Form 30, so daß der Gittergewebestreifen 41 nach beiden Seiten über die Form 30 vorsteht. Beim Extrudieren durchdringt die plastifizierte Kunststoffmasse die Maschen 42 des Gittergewebestreifens 41 und schließt im Bereich der beiden Formhohlräume 33, 33' das Material des Gittergewebestreifens 41 ein. Demgemäß sind die beabstandet voneinander an einem Stirnende der Form austretenden Kederprofile 40, 40' von dem Gittergewebestreifen 41 durchdrungen und durch diesen fest miteinander verbunden.

Anstelle der als Ausführungsbeispiele in der Zeichnung veranschaulichten und vorstehend beschriebenen Kederprofile können mit dem erfindungsgemäßen Verfahren Kunststoffprofile vielfältiger Querschnitte hergestellt und beim Extrudieren mit Gittergewebe konfektioniert werden. Dabei können die Kunststoffprofile in beliebiger Weise von einem Gittergewebestreifen durchstoßen oder auch nur Randstreifen des Gittergewebes eingebettet sein, die im letztgenannten Falle nach einer Seite von dem jeweiligen Kunststoffprofil vorstehen.

## Patentansprüche

1. Verfahren zum Herstellen von Kunststoffprofilen mit Gittergewebekonfektionierung, wobei ein netzartiger Gittergewebestreifen nach wenigstens einer Seite von zumindest einem Kunststoffprofil vorsteht,
gekennzeichnet durch
die Herstellung des Kunststoffprofils (20, 40, 40') durch Extrudieren sowie dadurch, daß beim Extrudieren wenigstens ein Randstreifen eines langgestreckten Gittergewebes (21, 41) in das noch plastifizierte Kunststoffmaterial eingebettet und im Bereich der Gittergewebemaschen (22, 42) vom Kunststoffmaterial durchdrungen sowie von letzterem umschlossen wird.

2. Verfahren nach Anspruch 1, dadurch gekennzeichnet, daß gleichzeitig wenigstens zwei Kunststoffprofile (40, 40') beabstandet voneinander extrudiert werden und daß in deren noch plastifiziertes Kunststoffmaterial zumindest jeweils ein Randstreifen eines die beiden Kunststoffprofile miteinander verbindenden Gittergewebes (41) eingebettet wird.

3. Vorrichtung zum Herstellen von Kunststoffprofilen (20, 40, 40') mit Gittergewebekonfektionierung, gekennzeichnet durch die Ausbildung als Form zum Extrudieren mit wenig stens einem langgestreckten, an einem Stirnende der Form (10,30) ausmündenden Formhohlraum (13, 33, 33'), der dem Querschnitt des herzustellenden Kunststoffprofils angepaßt ist und in den ein Kanal (17, 37) zum Zuführen plastifizierter Kunststoffmasse einmündet, und dadurch gekennzeichnet, daß sich in Längsrichtung des Formhohlraums (13, 33, 33') ein diesen schneidender flacher Spalt (18, 38) durch die Form hindurcherstreckt, der von dem Stirnende mit der Ausmündung des Formhohlraums (13, 33, 33') bis zum anderen Stirnende durchläuft.

4. Vorrichtung nach Anspruch 3, dadurch gekennzeichnet, daß der sich durch die Form (10) in Richtung der Längenausdehnung des Formhohlraums (13, 33, 33') hindurcherstreckende Spalt (18, 38) bis zu einer die Form (10) begrenzenden Seitenkante (19) reicht.

5. Vorrichtung nach Anspruch 3 oder 4, dadurch gekennzeichnet, daß die Form (10, 30) zweiteilig mit einem Formunterteil (11, 31) und einem Formoberteil (12, 32) ausgebildet ist, das jeweils ein Teil des Formhohlraums (13, 33, 33') sich in beiden Formteilen (11, 12; 31, 32) erstreckt und das Letztere untere Ausbildung des den Formhohlraum schneidenden flachen Spaltes (18, 38) beabstandet voneinander gehalten sind.

6. Vorrichtung nach einem der Ansprüche 3 bis 5, dadurch gekennzeichnet, daß die Form (30) wenigstens zwei parallel zueinander verlaufende und am selben Stirnende ausmündende Formhohlräume (33, 33') besitzt.

7. Vorrichtung nach Anspruch 6, dadurch gekennzeichnet, daß die Formhohlräume (33, 33') mit einem gemeinsamen Kanal (37) zum Zuführen plastifizierter Kunststoffmasse ausgerüstet ist.

8. Verfahren nach Anspruch 1, dadurch gekennzeichnet, daß beim Extrudieren eines Kunststoffprofils in voneinander beabstandete Profilbereiche streifenförmige Abschnitte zumindest eines Gittergewebestreifens (21, 41) eingebettet werden.
